# EUROPÄISCHE PATENTANMELDUNG

(11) **EP 0 762 716 A2**
(43) Veröffentlichungstag der Anmeldung: **12.03.1997**
(21) Anmeldenummer: 96111662.1
(22) Anmeldetag: 19.07.1996
(51) Int. Cl.: H04M 3/56

(54) **Verfahren, Kommunikationssystem und Konferenzeinheit zur Durchführung von Konferenzen**

(30) Priorität: 20.07.1995 DE 19526484
(71) Anmelder: Alcatel SEL Aktiengesellschaft, D-70435 Stuttgart (DE); ALCATEL N.V., NL-2288 BH Rijswijk (NL)
(72) Erfinder: Apfelbeck,Jürgen, 58097 Hagen (DE); Bosiers,Wiliam, 2540 Hove (BE); Weis,Dr.Bernd X., 7085 Korntal (DE); Stichelbaut,Philip, 8550 Zwevegem (BE)
(74) Vertreter: Schätzle, Albin, Dipl.-Phys.

(57) **Zusammenfassung**

Es wird vorgeschlagen, in einem Konferenzsystem (KS) zur Durchführung von Konferenzen, insbesondere von Breitbandkonferenzen, mehrere Konferenzeinheiten (KE1, KE2) zur Mischung von Signalen (S1 ... S4) verteilt einzusetzen. Die Signale (S1 ... S4) der Teilnehmerstationen (T1 ... T4), die an der Konferenz teilnehmen, werden nicht notwendigerweise in einer einzigen Konferenzeinheit gemischt, sondern die Mischung wird auf die mehreren Konferenzeinheiten (KE1, KE2) verteilt. Auf diese Weise ist es möglich, Signale, die einen teilweise gemeinsamen Übertragungsweg in dem Kommunikationssystem haben, in einer ersten Konfererizeinheit (KE1) in ein Teilsignal (S12) zu mischen. Dieses gemischte Teilsignal (S12) wird dann zu einer zweiten Konferenzeinheit (KE2) übertragen und in dieser zweiten Konfererizeinheit (KE2) mit einem oder mehreren weiteren Signalen (S3, S4) gemischt. Da das gemischte Teilsignal (S12) bei der Übertracung die gleiche Bandbreite belegt wie ein einzelnes Signal (S1 ... S4) von einer der Teilnehmerstationen (T1 ... T4), kann so die für die Konferenz benötigte Übertragungskapazität im Kommunikationssystem (KS) gering gehalten werden.

## Beschreibung

Die vorliegende Erfindung betrifft ein Verfahren zur Durchführung von Konferenzen gemäß dem Oberbegriff des Patentanspruchs 1, ein Kommunikationssystem gemäß dem Oberbegriff des Patentanspruchs 4 und eine Konferenzeinheit gemäß dem Oberbegriff des Patentanspruchs 7.

Aus der veröffentlichten Europäischen Patentanmeldung EP 0515703 A1 ist ein Kommunikationssystem bekannt, in dem Teilnehmerstationen über eine Vermittlungsstelle mit einer einzigen Konferenzeinheit verbunden sind. Dieses Kommunikationssystem wird zur Durchführung von Videokonferenzen benutzt. Die Vermittlungsstelle vermittelt Punkt-zu-Punkt-Kanäle zwischen den Teilnehmerstationen und der Konferenzeinheit. In einem solchen Kommunikationssystem übermitteln die an einer Konferenz teilnehmenden Teilnehmerstationen Signale, im vorliegenden Fall Video- und Audiosignale, zu der einzigen Konferenzeinheit. Diese übermittelten Signale werden in der Konferenzeinheit gemäß der von den Teilnehmerstationen signalisierten gewünschten Zusammenstellung gemischt. Diese gemischten Signale werden anschließend von der Konferenzeinheit zu den jeweiligen Teilnehmerstationen übermittelt.

Üblicherweise ist in einem Kommunikationssystem der vorliegenden Art statt der vereinfacht angenommenen einzigen Vermittlungsstelle ein Kommunikationsnetz vorhanden, das aus einer Vielzahl von Vermittlungsstellen, die miteinander verbunden sind, zusammengesetzt ist. Die an der Konferenz teilnehmenden Teilnehmerstationen sind im allgemeinen an unterschiedliche Vermittlungsstellen des Kommunikationsnetzes angeschlossen. Für die Übertragung der Signale von den jeweiligen Teilnehmerstationen zu der einzigen Konferenzeinheit wird in dem Kommunikationsnetz für jedes zu übertragende Signal ein Kanal vorgegebener Bandbreite benötigt. Auf diese Weise wird eine große Übertragungskapazität in dem Kommunikationsnetz bei der Übertragung der Signale belegt.

Elektronische Konferenzen, insbesondere breitbandige, multimediale Konferenzen, gewinnen immer mehr an Bedeutung. Allerdings sind die Kosten für die Belegung von Übertragungskapazitäten immer noch sehr hoch, so daß eine größere Akzeptanz erst dann zu erwarten ist, wenn diese Übertragungskosten sinken.

Es ist die Aufgabe der vorliegenden Erfindung, eine Lösung anzugeben, mit der eine Belegung einer geringen Übertragungskapazität in einem Kommunikationssystem zur Durchführung von Konferenzen erreicht wird.

Diese Aufgabe ist erfindungsgemäß durch die Lehren der Patentansprüche 1, 4 oder 7 gelöst.

Ein Grundgedanke der Erfindung ist, in dem Kommunikationssystem mehrere Konferenzeinheiten verteilt einzusetzen. Die Signale der Teilnehmerstationen, die an der Konferenz teilnehmen, werden nicht notwendigerweise in einer einzigen Konferenzeinheit gemischt, sondern die Mischung wird auf die mehreren Konferenzeinheiten verteilt. Auf diese Weise ist es möglich, Signale, die einen teilweise gemeinsamen Übertragungsweg in dem Kommunikationssystem haben, in einer ersten Konferenzeinheit in ein Teilsignal zu mischen. Dieses gemischte Teilsignal wird dann zu einer zweiten Konferenzeinheit übertragen und in dieser zweiten Konferenzeinheit mit einem oder mehreren weiteren Signalen gemischt. Da das gemischte Teilsignal bei der Übertragung die gleiche Bandbreite belegt wie ein einzelnes Signal von einer der Teilnehmerstationen, kann so die für die Konferenz benötigte Übertragungskapazität im Kommunikationssystem gering gehalten werden.

Vorteilhafte Ausgestaltungen der Erfindung sind den abhängigen Patentansprüchen zu entnehmen.

Zum besseren Verständnis der Erfindung werden im folgenden drei Ausführungsbeispiele anhand der Figuren 1 bis 3 beschrieben. Es zeigen:
- Fig. 1: ein erstes Ausführungsbeispiel eines erfindungemäßen Kommunikationssystems,
- Fig. 2: ein Ausführungsbeispiel einer erfindungsgemäßen Konferenzeinheit und
- Fig. 3: ein zweites Ausführungsbeispiel des erfindungemäßen Kommunikationssystems.

In den Ausführungsbeispielen werden im folgenden für gleiche oder gleichwirkende Elementen durchweg gleiche Bezugszeichen verwendet.

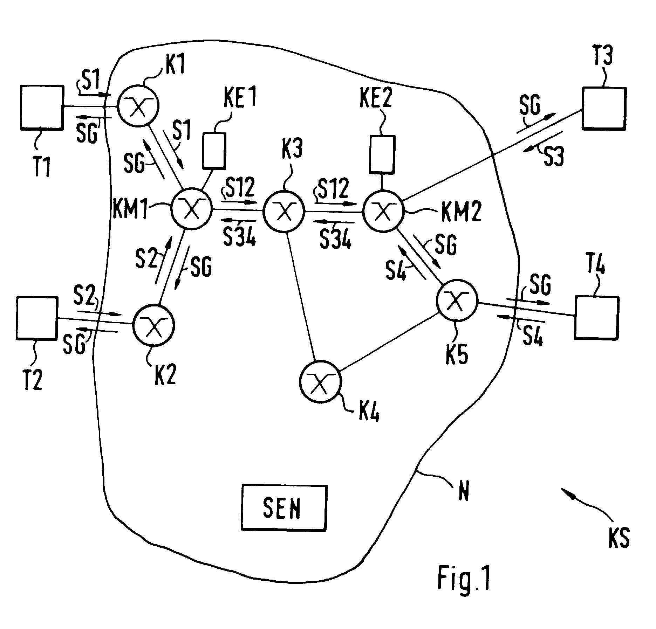

Ein in der Fig. 1 abgebildetes erstes Ausführungsbeispiel zeigt ein Kommunikationssystem KS mit vier Teilnehmerstationen T1 ... T4, die an einer Konferenz teilnehmen. Diese Konferenz ist im vorliegenden Ausführungsbeispiel eine Videokonferenz. Sie kann aber auch eine anders geartete Konferenz sein, bei der Signale mehrerer Teilnehmerstationen gemischt werden. Die Teilnehmerstationen T1 ... T4 sind im Ausführungsbeispiel bekannte Bildtelefone, die jeweils mit einem Kommunikationsnetz N für vermittelte Verbindungen verbunden sind. Das Kommunikationsnetz N weist eine Vielzahl von Vermittlungsstellen auf, die jeweils eine Breitbandkommunikation ermöglichen. Breitbandkommunikations steht hier sowohl für eine Kommunikation mit einer Bitfolgefrequenz von 64 kbit/s (ISDN) als auch für 140 Mbit/s oder sehr viel höhere Bitfolgefrequenzen. Die Vermittlungsstellen des Kommunikationsnetzes N sind im vorliegenden Ausführungsbeispiel Vermittlungsstellen nach dem bekannten ATM-Standard (ATM = Asynchronous Transfer Mode). Im vorliegenden ersten Ausführungsbeispiel werden einfachheitshalber nur die Vermittlungsstellen K1 ... K5 und KM1 und KM2 des Kommunikationsnetzes N beschrieben. Diese Vermittlungsstellen sind auf die folgende Weise miteinander vermascht. Die Vermittlungsstellen K1 und K2 sind jeweils mit der Vermittlungsstelle KM1 verbunden. KM1 ist wiederum mit der Vermittlungsstelle K3 und diese jeweils mit den Vermittlungsstellen KM2 und K4 verbunden. Die Vermittlungsstellen KM2 und K4 haben des weiteren eine Verbindung zu der Vermittlungsstelle K5. Die Teilnehmerstation T1 ist an die Vermittlungsstelle K1, die Teilnehmerstation T2 an die Vermittlungsstelle K2, die Teilnehmerstation T3 an die Vermittlungsstelle KM2 und die Teilnehmerstation T4 an die Vermittlungsstelle K5 angeschlossen. An die Vermittlungsstelle KM1 ist eine erste Konferenzeinheit KE1 und an die Vermittlungsstelle KM2 ist eine zweite Konferenzeinheit KE2 angeschlossen. In dem Kommunikationssystem KS können auch noch mehr Konferenzeinheiten vorhanden sein. Diese sind hier einfachheitshalber nicht weiter beschrieben. Die Konferenzeinheiten KE1 und KE2 sind jeweils wie eine weitere Teilnehmerstation in der üblichen Weise an die Vermittlungsstelle KM1 bzw. KM2 angeschlossen. Es ist allerdings auch möglich, die Konferenzeinheiten KE1 und KE2 in den zugehörigen Vermittlungsstellen KM1 bzw. KM2 zu integrieren. Das Kommunikationssystem KS weist eine Steuereinheit SEN auf, die die Leitweglenkung innerhalb des Kommunikationssystems KS und insbesondere den Aufbau von Verbindungen der an der Konferenz teilnehmenden Teilnehmerstationen T1 ... T4 zu den Konferenzeinheiten KE1 und KE2 und damit die Mischung der Signale der an der Konferenz beteiligten Teilnehmerstationen T1 ... T4 steuert. Die Steuereinheit SEN ist im vorliegenden Kommunikationssystem KS zentral im Kommunikationssystem angeordnet. Es ist auch möglich, die Steuereinheit SEN dezentral auf die Vermittlungsstellen zu verteilen.

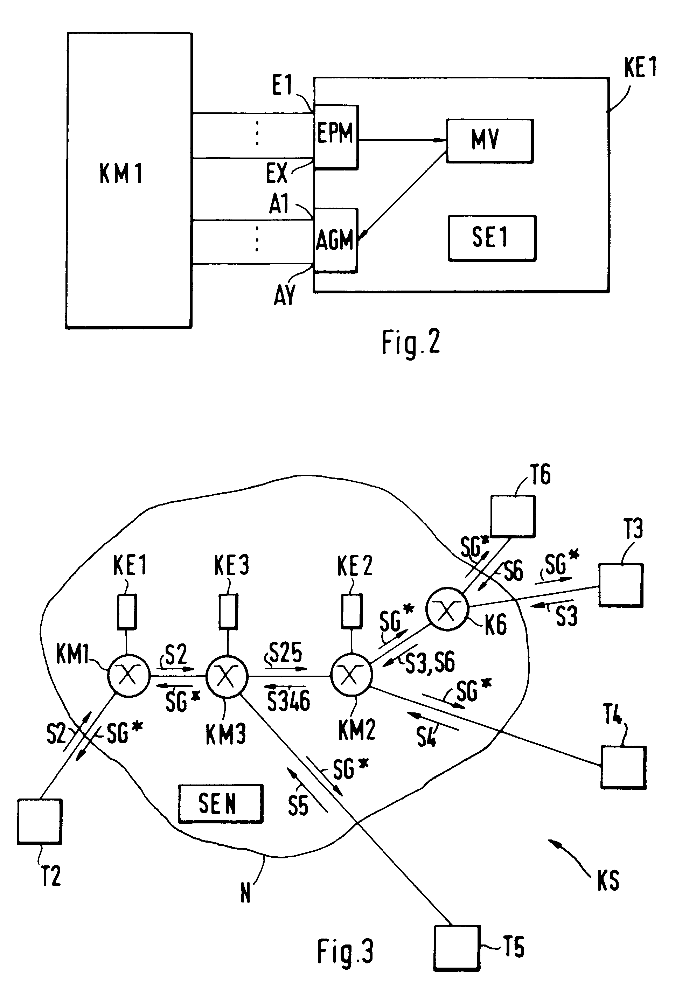

Stellvertretend für den Aufbau der Konferenzeinheiten wird im folgenden anhand von Fig. 2 ein Ausführungsbeispiel der Konferenzeinheit KE1 beschrieben. Die Konferenzeinheit KE1 besitzt im vorliegenden Ausführungsbeispiel x Eingänge E1 ... EX und y Ausgänge A1 ... AY, die mit der Vermittlungsstelle KM1 verbindbar sind. Die Eingänge E1 ... EX sind an ein Empfangsmittel EPM zum Empfang von an den Eingängen E1 ... EX eintreffenden Signalen und die Ausgänge A1 ... AY an ein Ausgabemittel AGM zur Ausgabe von gemischten Signalen angeschlossen. Die Konferenzeinheit KE1 weist des weiteren eine Mischvorrichtung MV zur Mischung von von dem Empfangsmittel EPM empfangenen Signalen und eine Steuereinheit ST1 auf, die die mit der Konferenzeinheit durchführbaren Funktionen steuert. Es ist durch nicht weiter beschriebene Mittel gewährleistet, daß die durch die Mischvorrichtung MV zu mischenden Signale zeitsynchron gemischt werden.

Im folgenden wird die Funktionsweise des Kommunikationssystems KS und der Konferenzeinheiten KE1 und KE2 für eine Videokonferenz zwischen den Teilnehmerstationen T1 ... T4 beschrieben. Zu den Teilnehmerstationen oder den Vermittlungsstellen übertragene Signale oder von ihnen ausgegebene Signale sind zur Verdeutlichung in der Fig. 1 dargestellt. Die Steuereinheit SEN steuert die Vermittlung der für die Konferenz benötigten Verbindungen in dem Kommunikationssystem KS. Dazu ist eine Leitweglenkung implementiert, die die Anordnung der Konferenzeinheiten innerhalb des Kommunikationsnetzes N berücksichtigt. Im vorliegenden ersten Ausführungsbeispiel übermittelt daher die Teilnehmerstation T1 ein Signal S1 über die Vermittlungsstelle K1 zu der Vermittlungsstelle KM1. Die Teilnehmerstation T2 übermittelt ein Signal S2 über die Vermittlungsstelle K2 zu der Vermittlungsstelle KM1. Die Signale S1 und S2 werden von der Vermittlungsstelle KM1 zu der an KM1 angeschlossenen ersten Konferenzeinheit KE1 übertragen. Dort werden die an den Eingängen eintreffenden Signale, S1 beispielsweise am Eingang E1 und S2 beispielsweise am Eingang E2, von dem Empfangsmittel EPM empfangen. Das Empfangsmittel EPM leitet die Signale S1 und S2 zu der Mischvorrichtung MV weiter. Die Mischvorrichtung MV mischt nach bekannten Algorithmen die beiden Signale S1 und S2 zu einem ersten Teilsignal S12 und übermittelt das erste Teilsignal S12 zum Ausgabemittel AGM, das das erste Teilsignal S12 über einen der Ausgänge, beispielsweise den Ausgang A1, zu der Vermittlungsstelle KM1 übermittelt. Das erste Teilsignal S12 wird daraufhin über die Vermittlungsstelle K3 zu der Vermittlungsstelle KM 2 und von dort zu der an KM2 angeschlossenen Konferenzeinheit KE2 übertragen. Die Teilnehmerstation T3 übermittelt ein Signal S3 zu der Vermittlungsstelle KM2, ebenso wie die Teilnehmerstation T4, die ein Signal S4 über die Vermittlungsstelle K5 zu der Vermittlungsstelle KM2 übermittelt. Die Signale S3 und S4 werden ebenfalls zu der zweiten Konferenzeinheit KE2 weiterübermittelt, von dort in der oben bei der ersten Konferenzeinheit KE1 beschriebenen Art und Weise empfangen und in einer Mischvorrichtung zu einem zweiten Teilsignal S34 gemischt, welches anschließend über ein Ausgabemittel zu der Vermittlungsstelle KM1 übertragen wird. Von der Vermittlungsstelle KM2 wird das zweite Teilsignal S34 über die Vermittlungsstelle K3 zu der Vermittlungsstelle KM1 und der daran angeschlossenen ersten Konferenzeinheit KE1 weiterübertragen. Das zweite Teilsignal S34 trifft beispielsweise an dem Eingang E3 ein und wird von dem Empfangsmittel EPM empfangen und an die Mischvorrichtung MV weitergeleitet. In der Mischvorrichtung MV wird das zweite Teilsignal S34 mit den Signalen S1 und S2 gemischt, so daß auf diese Weise ein Gesamtsignal SG aller an der Konferenz teilnehmenden Teilnehmerstationen T1 ... T4 entsteht. Dieses Gesamtsignal SG wird von der Mischvorrichtung MV an das Ausgabemittel AGM übertragen und von diesem über einen der Ausgänge A1 ... AY zu der Vermittlungsstelle KM1 ausgegeben. Die Vermittlungsstelle KM1 übermittelt das Gesamtsignal SG einmal über die Vermittlungsstelle K1 zu der Teilnehmerstation T1 und zum zweiten über die Vermittlungsstelle K2 zu der Teilnehmerstation T2. Selbiges wird mit dem ersten Teilsignal S12 und den Signalen S3 und S4 in der zweiten Konferenzeinheit KE2 durchgeführt. In der Mischvorrichtung der zweiten Konferenzeinheit KE2 wird aus diesen drei Signalen S34, S3 und S4 ebenfalls das Gesamtsignal SG erzeugt. Dieses Gesamtsignal SG wird über das Ausgabemittel und einen der Ausgänge zu der Vermittlungsstelle KM2 ausgegeben, die das Gesamtsignal SG zu der Teilnehmerstation T3 und über die Vermittlungsstelle K5 zu der Teilnehmerstation T4 übermittelt.

Der Aufbau der Konferenz durch die Steuereinheit SEN kann auf verschiedene Weise durchgeführt werden. Es ist beispielsweise möglich, von jeder der an der Konferenz teilnehmenden Teilnehmerstation eine Verbindung zu einer Zentrale, beispielsweise der Steuereinheit SEN, aufzubauen und dieser damit zu signalisieren, welche Teilnehmerstationen an der Konferenz teilnehmen. Aufgrund der in der Steuereinheit SEN gespeicherten Informationen über das Kommunikationsnetz N und der Anordnung der Konferenzeinheiten innerhalb des Kommunikationsnetzes, bestimmt die Steuereinheit SEN die im Kommunikationssystem KS aufzubauenden Verbindungen und die zu aktivierenden Konferenzeinheiten zur Mischung der übermittelten Signale. Die Steuereinheit SEN legt daher durch die Bestimmung der aufzubauenden Verbindungen einen sogenannten Baum von Verbindungen für diese Videokonferenz fest. Ein solcher Baum von Verbindungen entspricht der Gesamtheit der in dem Kommunikationssystem KS benötigten Verbindungen zur Durchführung der Videokonferenz. Die Ermittlung der aufzubauenden Verbindungen und damit die Festlegung des Baumes durch die Leitweglenkung kann nach verschiedenen Kriterien erfolgen. Solche Kriterien können beispielsweise die geographische Entfernung der jeweiligen Konferenzeinheit von den Teilnehmerstationen, die gemäß der Gebührenstruktur für die jeweiligen Teilnehmerstationen günstigsten Verbindungen oder irgendein anderes Kriterium oder eine Kombination verschiedener Kriterien sein. Nach der Festlegung des Baumes von Verbindungen werden diese Verbindungen aufgebaut und die Konferenz über sie durchgeführt.

Eine zweite Möglichkeit des Aufbaus der Konferenz besteht beispielsweise in einem schrittweisen Aufbau der für die Konferenz nötigen Verbindungen. Dabei werden zunächst durch die Leitweglenkung in der üblichen Weise von den Teilnehmerstationen aus jeweils schrittweise Wege von Vermittlungsstelle zu Vermittlungsstelle geschaltet. Treffen mehrere dieser Wege in einer der Vermittlungsstellen zusammen, an die eine Konferenzeinheit angeschlossen ist, so wird von dieser Vermittlungsstelle zu der nächsten Vermittlungsstelle, an die eine weitere der Konferenzeinheiten angeschlossen ist und zu der ein weiterer, von einer an der Konferenz teilnehmenden Teilnehmerstation kommender Weg geschaltet ist, nur ein einziger Weg geschaltet. Die auf den mehreren Wegen zu der Konferenzeinheit übermittelten Signale werden, wie oben beschrieben, in der Konferenzeinheit zu einem einzigen Teilsignal gemischt. Dieses Teilsignal benötigt für seine Übermittlung nur einen einzigen Weg zu der nächsten Vermittlungsstelle mit angeschlossener Konferenzeinheit.

Eine dritte Möglichkeit des Aufbaus der Konferenz besteht beispielsweise darin, daß die Vermittlungsstellen jeweils für die Leitweglenkung Informationen über die Struktur eines vorgegebenen lokalen Bereichs des Kommunikationsnetzes N besitzen. Diese Informationen beinhalten insbesondere Angaben über die Anordnung von Konferenzeinheiten in diesem lokalen Bereich. Diese Angaben können von der jeweiligen Vermittlungsstelle beim Schalten von Wegen für den Aufbau der Konferenz berücksichtigt werden, so daß beispielsweise für das Signal einer an der Konferenz beteiligten Teilnehmerstation ein Weg zu einer Vermittlungsstelle mit angeschlossener Konferenzeinheit geschaltet wird, um dieses Signal darin zu mischen, obwohl die jeweilige Vermittlungsstelle, besäße sie die Angaben nicht, einen anderen Weg schalten würde.

Für die Mischung der von den Teilnehmerstationen kommenden Signale sind verschiedene Möglichkeiten denkbar. In den vorliegenden Ausführungsbeispielen überprüft die Steuereinheit einer jeden Konferenzeinheit, ob die Ein- und Ausgänge der Konferenzeinheit mit weiteren, an der Konferenz beteiligten Konferenzeinheiten oder mit Teilnehmerstationen verbunden sind. Dabei empfängt die Konferenzeinheit eine von den jeweiligen mit ihren Ein- und Ausgängen verbundenen Teilnehmerstationen und Konferenzeinheiten eine entsprechende Signalisierung. Ist einer der Ausgänge mit einer der an der Konferenz beteiligten Konferenzeinheiten verbunden, so veranlaßt die Steuereinheit über das Ausgabemittel die Ausgabe des Teilsignales, das durch die Mischung der an den Eingängen anliegenden Signale, außer dem von dieser an den Ausgang angeschlossenen Konferenzeinheit übermittelten Signal, erzeugt wurde. Ist der jeweilige Ausgang mit einer Teilnehmerstation verbunden, so veranlaßt die Steuereinheit über das Ausgabemittel die Ausgabe des Gesamtsignales, das durch die Mischung aller an den Eingängen der Konferenzeinheit anliegenden Signale erzeugt wurde. Jede an der Videokonferenz beteiligte Teilnehmerstation empfängt daher im vorliegenden Ausführungsbeispiel das Gesamtbild SG von derjenigen Konferenzeinheit, zu der sie ihr Signal zur erstmaligen Mischung mit weiteren Signalen übermittelt hat.

Eine zusätzliche Teilnehmerstation der Konferenz oder eine die Konferenz verlassende Teilnehmerstation kann einen Umbau der aufgebauten Verbindungen und damit eine Änderung des Baumes von Verbindungen für die Videokonferenz bewirken. In diesem Fall können neue Konferenzeinheiten aktiviert und bereits aktivierte Konferenzeinheiten deaktiviert werden. Dieser Umbau kann beispielsweise durch die Steuereinheit SEN vorgenommen werden. Es ist allerdings auch möglich, den Umbau über die Steuereinheiten der jeweiligen an der Konferenz beteiligten Konferenzeinheiten zu steuern.

Fig. 3 zeigt ein zweites Ausführungsbeispiel des erfindungsgemäßen Kommunikationssystems KS nach einem Umbau. In diesem zweiten Ausführungsbeispiel hat die Teilnehmerstation T1 die Konferenz verlassen und die Teilnehmerstationen T5 und T6 sind zusätzlich zu der Konferenz hinzugekommen. Dies hatte einen Umbau der bestehenden Verbindungen und der aktivierten Konferenzeinheiten zur Folge. In dem vorliegenden zweiten Ausführungsbeispiel sind die an der Konferenz beteiligten Teilnehmerstationen T2 ... T6 jeweils mit dem Kommunikationsnetz N verbunden. Innerhalb des Kommunikationsnetzes N sind die Vermittlungsstellen KM1 und KM2 und des weiteren eine Vermittlungsstelle KM3 und eine Vermittlungsstelle K6 beteiligt. An die Vermittlungsstelle KM1 ist die Konferenzeinheit KE1, an die Vermittlungsstelle KM2 die Konferenzeinheit KE2 und an die Vermittlungsstelle KM3 eine dritte Konferenzeinheit KE3 in der oben beschriebenen Weise angeschlossen. Die Teilnehmerstation T2 ist an die Vermittlungsstelle KM1, die Teilnehmerstation T5 an die Vermittlungsstelle KM3, die Teilnehmerstation T4 an die Vermittlungsstelle KM3 und die Teilnehmerstationen T3 und T6 an die Vermittlungsstelle K6 angeschlossen. Die Vermittlungsstelle KM1 ist mit der Vermittlungsstelle KM3 und diese wiederum mit der Vermittlungsstelle KM2 verbunden. Die Vermittlungsstelle K6 ist ebenfalls mit der Vermittlungsstelle KM2 verbunden. Auch in dem vorliegenden zweiten Ausführungsbeispiel weist das Kommunikationssystem KS die Steuereinheit SEN auf.

Im folgenden wird die Funktionsweise des Übermittlung und Mischung der von den an der Konferenz beteiligten Teilnehmerstationen T2 ... T6 übermittelten Signale beschrieben. Die jeweils von den Teilnehmerstationen und den Vermittlungsstellen abgehenden und an ihnen ankommenden Signale sind in die Fig. 3 eingezeichnet. Die Teilnehmerstation T2 übermittelt das Signal S2 zu der Vermittlungsstelle KM1. Da an der Vermittlungsstelle KM1 kein weiteres Signal einer an der Konferenz teilnehmenden Teilnehmerstation eintrifft, wird dieses Signal S2 nicht zu der an die Vermittlungsstelle KM1 angeschlossene Konferenzeinheit KE1, sondern zu der Vermittlungsstelle KM3 weitergeleitet. Die Teilnehmerstation T5 übermittelt ein Signal S5 zu der Vermittlungsstelle KM3, die die Signale S2 und S5 zu der an sie angeschlossenen Konferenzeinheit KE3 weiterleitet. In der Konferenzeinheit KE3 werden die Signale S2 und S5 in der bereits oben beschriebenen Weise empfangen und in ein drittes Teilsignal S25 gemischt. Dieses dritte Teilsignal S25 wird von der Konferenzeinheit KE3 über die Vermittlungsstelle KM3 zu der Vermittlungsstelle KM2 übermittelt. Ein von der Teilnehmerstation T4 zu der Vermittlungsstelle KM2 übermitteltes Signal S4 wird zusammen mit dem dritten Teilsignal S25 zu der an die Vermittlungsstelle KM2 angeschlossenen Konferenzeinheit KE2 weitergeleitet. Gleiches geschieht mit dem von der Teilnehmerstation T3 über die Vermittlungsstelle K6 zu der Vermittlungsstelle KM2 und einem von der Teilnehmerstation T6 über die Vermittlungsstelle K6 zu der Vermittlungsstelle KM2 übertragenen Signal S6. In der Konferenzeinheit KE2 werden die Signale S3, S4 und S6 zu einem vierten Teilsignal S346 gemischt. Dieses vierte Teilsignal S346 wird von der Konferenzeinheit KE2 über die Vermittlungsstelle KM2 zu der Vermittlungsstelle KM3 und von dort zu der Konferenzeinheit KE3 übermittelt. In der Konferenzeinheit KE3 wird dieses vierte Teilsignal S346 mit dem Signal S2 zu einem Gesamtsignal SG* gemischt. Dieses Gesamtsignal SG* wird anschließend von der Konferenzeinheit KE3 über die Vermittlungsstelle KM3 zu der Teilnehmerstation T5 und des weiteren über die Vermittlungsstellen KM3 und KM1 zu der Teilnehmerstation T2 übermittelt. In der Konferenzeinheit KE2 wird weiterhin das dritte Teilsignal S25 mit den Signalen S4, S3 und S6 zu dem Gesamtsignal SG* gemischt. Dieses Gesamtsignal SG* wird von der Konferenzeinheit KE2 über die Vermittlungsstelle KM2 zu der Teilnehmerstation T4 und über die Vermittlungsstellen KM2 und K6 zu den Teilnehmerstationen T3 und T6 übermittelt. Der Empfang, die Mischung und die Ausgabe der Signale in den Konferenzeinheiten KE1 und KE2 wird auf die bereits im ersten Ausführungsbeispiel beschriebene Weise durchgeführt.

Mittels der vorliegenden Erfindung ist es ebenfalls möglich, daß die an der Konferenz beteiligten Teilnehmerstationen ihr gewünschtes Gesamtbild individuell zusammenstellen können. Dazu signalisieren sie den an der Konferenz beteiligten Konferenzeinheiten, welche der von den Teilnehmerstationen übermittelten Signale sie in dem Gesamtbild empfangen wollen und welches Signal sie als Groß- oder Kleinbild empfangen wollen. Mittels der Erfindung können die Konferenzeinheiten entsprechend der empfangenen Signalisierungen die individuellen Gesamtbilder für jede der an der Konferenz beteiligten Teilnehmerstationen mischen.

## Patentansprüche

1. Verfahren zur Durchführung von Konferenzen, insbesondere von Breitbandkonferenzen, in einem Kommunikationssystem (KS) mit Teilnehmerstationen (T1 ... T4) und mit einer Konferenzeinheit zur Mischung von Signalen,
bei dem von den Teilnehmerstationen (T1 ... T4), die an der Konferenz beteiligt sind, jeweils ein Signal zu der Konferenzeinheit übermittelt wird,
**dadurch gekennzeichnet,** daß in dem
Kommunikationssystem (KS) wenigstens eine erste Konferenzeinheit (KE1) und eine zweite Konferenzeinheit (KE2) vorhanden sind, daß in der ersten Konferenzeinheit (KE1) die Signale (S1, S2) von wenigstens zwei Teilnehmerstationen (T1, T2) zu einem Teilsignal (S12) gemischt werden und
daß in der zweiten Konferenzeinheit (KE2) das Teilsignal (S12) mit einem oder mehreren anderen Signalen (S3, S4) von einer bzw. mehreren anderen Teilnehmerstationen (T3, T4) gemischt wird.

2. Verfahren nach Anspruch 1,
dadurch gekennzeichnet, daß den an der Konferenz beteiligten Teilnehmerstationen (T1 ... T4) jeweils ein Gesamtsignal (SG) der an der Konferenz beteiligten Teilnehmerstationen (T1, ..., T4) von der Konferenzeinheit (KE1, KE2) übermittelt wird, in der ihr jeweiliges Signal (S1 ... S4) zum erstenmal gemischt wurde.

3. Verfahren nach Anspruch 1,
dadurch gekennzeichnet, daß in jeder der Konferenzeinheiten (KE1, KE2) überprüft wird, ob ihre jeweiligen Ein- und Ausgänge (E1 ... EX, A1 ... AY) mit einer weiteren, an der Konferenz beteiligten Konferenzeinheit (KE1, KE2) oder einer Teilnehmerstation (T1 ... T4) verbunden sind,
daß der weiteren, an der Konferenz beteiligten Konferenzeinheit (KE1, KE2) ein Teilsignal (S12, S34) übermittelt wird, das durch eine Mischung der an den jeweiligen Eingängen anliegenden Signale, außer dem von der weiteren, an der Konferenz beteiligten Konferenzeinheit (KE1, KE2) übermittelten Signal, erzeugt wird, und daß den Teilnehmerstationen (T1 ... T4) ein Gesamtsignal (SG) übermittelt wird, das durch die Mischung aller an den jeweilgen Eingängen anliegenden Signale erzeugt wird.

4. Kommunikationssystem (KS) zur Durchführung von Konferenzen, insbesondere von Breitbandkonferenzen,
mit Teilnehmerstationen (T1 ... T4) und mit einer Konferenzeinheit zur Mischung von Signalen,
**dadurch gekennzeichnet,**
daß das Kommunikationssystem (KS) wenigstens eine erste Konferenzeinheit (KE1) und eine zweite Konferenzeinheit (KE2) aufweist und
daß es eine Steuereinheit (SEN) zur Mischung der Signale der an einer Konferenz beteiligten Teilnehmerstationen (T1 ... T4) aufweist, die die Mischung so steuert, daß die erste Konferenzeinheit (KE1) die Signale (S1, S2) von wenigstens zwei Teilnehmerstationen (T1, T2) zu einem ersten Teilsignal (S12) mischt und die zweite Konferenzeinheit (KE2) das erste Teilsignal (S12) mit einem oder mehreren anderen Signalen (S3, S4) von einer bzw. mehreren anderen Teilnehmerstationen (T3, T4) mischt.

5. Kommunikationssystem nach Anspruch 4,
dadurch gekennzeichnet, daß die Steuereinheit (SEN) die Mischung der Signale so steuert, daß die an der Konferenz beteiligten Teilnehmerstationen (T1 ... T4) jeweils ein Gesamtsignal (SG) der an der Konferenz beteiligten Teilnehmerstationen (T1, ..., T4) von der Konferenzeinheit (KE1, KE2) empfangen, in der ihr jeweiliges Signal (S1 ... S4) zum erstenmal gemischt wurde.

6. Kommunikationssystem nach Anspruch 4,
dadurch gekennzeichnet, daß die Konferenzeinheiten (KE1, KE2) in Vermittlungsstellen (KM1, KM2) integriert angeordnet sind.

7. Konferenzeinheit (KE1) zur Mischung von Signalen für ein Kommunikationssystem (KS) zur Durchführung von Konferenzen, insbesondere von Breitbandkonferenzen,
mit Ein- und Ausgängen (E1 ... EX, A1 ... AY),
mit einem Empfangsmittel (EPM) zum Empfang von an den Eingängen eintreffenden Signalen,
mit einem Ausgabemittel (AGM) zur Ausgabe von gemischten Signalen und
mit einer Mischvorrichtung (MV) zur Mischung von durch das Empfangsmittel (EPM) empfangenen Signalen,
**dadurch gekennzeichnet,** daß die Ein- und Ausgänge (E1 ... EX, A1 ... AY) mit weiteren Konferenzeinheiten (KE2) des Kommunikationssystems verbindbar sind und daß die Konferenzeinheit (KE1) eine Steuereinheit (SE1) aufweist, die überprüft, ob die Ein- und Ausgänge mit weiteren, an der Konferenz beteiligten Konferenzeinheiten (KE2) oder mit Teilnehmerstationen (T1, T2) verbunden sind, daß die Steuereinheit (SE1) die Ausgabe eines Teilsignals (S12) über das Ausgabemittel (AGM) an dem Ausgang veranlaßt, der mit einer der weiteren, an der Konferenz beteiligten Konferenzeinheiten (KE2) verbunden ist, und dieses Teilsignal (S12) durch eine Mischung der an den Eingängen anliegenden Signale (S1, S2), außer dem von dieser weiteren, an der Konferenz beteiligten Konferenzeinheit (KE2) übermittelten Signal (S34), in der Konferenzeinheit (KE1) erzeugt wird, und daß die Steuereinheit (SE1) die Ausgabe eines Gesamtsignals (SG) über das Ausgabemittel (AGM) an dem Ausgang veranlaßt, der mit einer Teilnehmerstation (T1, T2) verbunden ist, und dieses Gesamtsignal (SG) durch die Mischung aller an den Eingängen anliegenden Signale (S1, S2, S34) in der Konferenzeinheit (KE1) erzeugt wird.
